# EUROPÄISCHE PATENTSCHRIFT

(11) **EP 0 760 216 B1**
(45) Veröffentlichungstag und Bekanntmachung des Hinweises auf die Patenterteilung: **06.11.2002**
(21) Anmeldenummer: 96113562.1
(22) Anmeldetag: 23.08.1996
(51) Int. Cl.: A41H 37/00, A41H 37/04, G05B 19/10

(54) **Ansetzvorrichtung**
Button applicator
Machine à fixer les boutons

(30) Priorität: 24.08.1995 DE 19531176
(43) Veröffentlichungstag der Anmeldung: 05.03.1997
(73) Patentinhaber: YKK CORPORATION, Chiyoda-ku, Tokyo (JP)
(72) Erfinder: Kamps, Rolf, 42329 Wuppertal (DE)
(74) Vertreter: Patentanwälte Leinweber & Zimmermann

(56) Entgegenhaltungen:
- EP-A- 0 193 707
- US-A- 4 006 464
- US-A- 4 276 610
- US-A- 4 524 414
- US-A- 4 833 589

## Beschreibung

Die Erfindung betrifft eine Vorrichtung zum sequentiellen Ansetzen von Elementen unterschiedlicher Typen an ein Trägermaterial, vorzugsweise zum Ansetzen von Schließelementen, wie etwa Druckknopfelementen, an Textil-, Leder- und Kunststoffartikel, gemäß einem vorgegebenen Programm, das aus einer Anzahl sequentiell ablaufender Programmschritte besteht, von denen jeder den Typ jeweils eines der anzusetzenden Elemente festlegt, mit einer auf einem Kontrollpaneel angeordneten und zum Darstellen des Programms betreibbaren Anzeige.

Beim Ansetzen von Druckknopfelementen an Textil-, Leder- und Kunststoffartikel werden im allgemeinen mindestens zwei Druckknopfelementtypen benötigt, nämlich ein Aufnahmeelement und ein in das Aufnahmeelement einführbares und damit lösbar festlegbares Einsteckelement. Diese Elemente sind zudem üblicherweise zweiteilig, nämlich aus einem Befestigungsteil, beispielsweise in Form eines Zackenrings, und dem eigentlichen Druckknopfteil gebildet. Zur Anpassung der Druckknopfelemente an die Oberflächengestaltung der Artikel, an die sie anzusetzen sind, werden in einigen Fällen verschiedenartige, beispielsweise verschiedenfarbige Befestigungsteile benutzt.

Zum Ansetzen der vorstehend beschriebenen Druckknopfelemente wird üblicherweise eine pressenartige Ansetzvorrichtung mit einem Oberwerkzeug und einem Unterwerkzeug, die gegeneinander preßbar sind, benutzt. Dabei wird einem der Werkzeuge ein Druckknopfteil und dem anderen ein Befestigungsteil zugeführt. Nach Einführen des Trägermaterials zwischen das Oberwerkzeug und das Unterwerkzeug kann dann das Druckknopfteil durch Pressen der beiden Werkzeuge gegeneinander mit dem Befestigungsteil am Trägermaterial befestigt werden.

Zum Ansetzen verschiedener Druckknopfelementtypen, die sich hinsichtlich ihres Druckknopfteils und/oder ihres Befestigungsteils voneinander unterscheiden können, an ein Trägermaterial werden dem Oberwerkzeug und/oder dem Unterwerkzeug Druckknopfteile und/oder Befestigungsteile aus verschiedenen Magazinen zugeführt. Beispielsweise werden dem Oberwerkzeug Aufnahmeteile und Einsteckteile aus entsprechenden Magazinen zugeführt, während dem Unterwerkzeug verschiedenfarbige Befestigungsteile zugeführt werden. Die Zufuhr der Druckknopfteile kann dabei gemäß einem vorgegebenen Programm gesteuert werden, das eine der Anzahl von an einen Artikel anzusetzenden Druckknopfelementen entsprechende Anzahl sequentiell ablaufender Programmschritte aufweist, wobei mit jedem Programmschritt der Typ jeweils eines der anzusetzenden Elemente festgelegt wird, d.h. genau ein einem der Preßwerkzeuge zuzuführendes Druckknopfteil und ein dem anderen Preßwerkzeug zuzuführendes Befestigungsteil ausgewählt wird.

Eine Vorrichtung der vorstehend beschriebenen Art ist beispielsweise aus der EP 0 193 707 B1 bekannt. In dieser Schrift wird vorgeschlagen, das Programm in eine Anzahl von Arbeitsgängen zu unterteilen, wobei in jedem Arbeitsgang eine festlegbare Anzahl von Druckknopfelementen gleichen Typs sequentiell angesetzt wird und zwischen den einzelnen Arbeitsgängen eine Änderung des Typs der anzusetzenden Druckknopfelemente erfolgen kann. Zur Darstellung eines aus einer Anzahl von derartigen Arbeitsgängen bestehenden Arbeitsprogramms wird der Einsatz einer Anzeige vorgeschlagen, die aus einer der Anzahl an Arbeitsgängen entsprechenden Anzahl an Anzeigefenstern besteht. Diese sind jeweils zum Anzeigen der Anzahl von in einem der Arbeitsgänge anzusetzenden Druckknopfelementen, d.h. der Anzahl von in einem Arbeitsgang auszuführenden Programmschritten betreibbar.

Die oben beschriebene Ansetzvorrichtung ermöglicht das programmgesteuerte Ansetzen von Druckknopfelementen unterschiedlicher Typen, die sich hinsichtlich ihres Druckknopfteils und/oder Befestigungsteils unterscheiden, mit nur einer Presse. Dazu muß das Bedienungspersonal den mit den Druckknopfelementen zu versehenden Artikel zwischen der Ausführung der einzelnen Programmschritte des Programms zwischen den Preßwerkzeugen verschieben, so daß jeweils die Stelle des Artikels genau zwischen den Preßwerkzeugen zu liegen kommt, an die bei der Ausführung des jeweils nächsten Programmschritts ein Druckknopfelement anzusetzen ist. Dabei kommt es beim Einsatz der herkömmlichen Ansetzvorrichtung häufig zu einer Fehlpositionierung des Artikels zwischen den Preßwerkzeugen, derart, daß an einer Stelle des Artikels, die an sich zum Ansetzen eines Druckknopfelementes vorgesehen ist, ein Druckknopfelement vom falschen Typ angesetzt wird.

Ferner offenbart die US 4,276,610 eine beispielsweise zum Betreiben von Waschmaschinen einsetzbare programmierbare Ablaufsteuerung, bei der während der Ausführung des Programms bei jedem Programmschritt die bei der Ausführung dieses Programmschritts durchgeführten Funktionen und die Dauer des Programmschritts angezeigt werden.

US 4,276,610 offenbart eine zur Steuerung von Werkzeugmaschinen einsetzbare numerische Steuerung, bei der zur Reduzierung der Anzahl der zur Programmierung benötigten Tasten Soft Keys eingesetzt werden, deren Belegung in Abhängigkeit von einer vorherigen Tastenbetätigung bestimmt wird.

Die US 4,833,589 offenbart eine programmierbare Ablaufsteuerung, bei der eine Sichtdarstellung der während der Ausführung einzelner Programmschritte erfolgten Eingangs- und Ausgangssignale der Steuerung an einem von der Werkzeugmaschine beanstandeten Ort erzeugt wird, indem die Eingangs- und Ausgangssigale zunächst mit einem Parallel/Seriell-Wandler in serielle Signale umgewandelt und dann am Ort der Sichtdarstellung wieder mit einem Seriell/Parallel-Wandler in parallele Daten umgewandelt und an einzelne Anzeigeelemente angelegt werden.

Angesichts des im Stand der Technik gemäß EP 0 193 707 B1 auftretenden technischen Problems liegt der Erfindung die Aufgabe zugrunde, eine Ansetzvorrichtung der eingangs beschriebenen Art bereitzustellen, die zur Verringerung der Anzahl von Ansetzfehlern eine Prüfung des Programmablaufs beim Ansetzen von Elementen unterschiedlicher Typen an ein Trägermaterial erlaubt.

Erfindungsgemäß wird diese Aufgabe dadurch gelöst, daß die Vorrichtung der eingangs beschriebenen Art mit einer Anzeige versehen wird, die eine Anzahl von Anzeigefeldern aufweist, von denen jedes jeweils einem der Programmschritte zugeordnet und zum Bezeichnen des damit festgelegten Elementtyps betreibbar ist, wobei die Anzeigefelder in der Reihenfolge der Programmschritte, denen sie zugeordnet sind, angeordnet sind.

Eine derartige Anzeige gibt dem Bedienungspersonal der Ansetzvorrichtung während der Ausführung des Programms eine vollständige Übersicht des gesamten Programmablaufs. So kann es vor Ausführung des ersten Programmschrittes überprüfen welcher Elementtyp als erstes anzusetzen ist und das Trägermaterial entsprechend positionieren. Im weiteren Verlauf der Programmausführung kann durch einen Vergleich der mit den bereits ausgeführten Programmschritten angesetzten Elemente und den Angaben in den diesen Programmschritten zugeordneten Anzeigefeldern ermittelt werden, wie weit das Programm bereits fortgeschritten ist und eine Überprüfung des Typ des im nächsten Programmschritt anzusetzenden Elementes vorgenommen werden. Auf diese Weise ermöglicht die erfindungsgemäße Anzeige eine Überprüfung des Ansetzbetriebs während des gesamten Programmablaufs.

Dabei wird eine besonders einfache Überprüfbarkeit des Ansetzbetriebs dadurch ermöglicht, dass die Anzeigefelder in der Reihenfolge der Programmschritte, denen sie zugeordnet sind, angeordnet sind.

Eine weitere Verbesserung der Übersichtlichkeit der Anzeige kann erreicht werden, wenn die Anzeigefelder längs einer vorgegebenen Geraden auf dem Kontrollpaneel angeordnet sind.

Zur Verdeutlichung der Zuordnung zwischen den einzelnen Programmschritten und Anzeigefeldern ist es zweckmäßig, wenn jedem Anzeigefeld eine auf dem Kontrollpaneel angebrachte, den Programmschritt, dem das jeweilige Anzeigefeld zugeordnet ist, bezeichnende Markierung, vorzugsweise eine Programmschrittnummer, zugeordnet ist.

Zur Anzeige der Typen der mit den einzelnen Programmschritten anzusetzenden Elemente weist jedes Anzeigefeld zweckmäßigerweise mindestens zwei Anzeigeelemente auf. Die Anzeigeelemente sind dabei zur Sicherstellung einer übersichtlichen Darstellung des Programmablaufs vorteilhafterweise längs senkrecht zur vorgegebenen Geraden verlaufenden Linien angeordnet.

Ein besonders übersichtliches Anzeigeelementraster kann dabei erhalten werden, wenn die Anzeigeelemente auf dem Anzeigepaneel längs einer Anzahl parallel zur vorgegebenen Geraden verlaufender Geraden angeordnet sind.

Zur besseren Zuordnung der einzelnen längs der senkrecht zur vorgegebenen Geraden verlaufenden Linien angeordneten Anzeigeelemente zu den einzelnen Elementtypen ist jeder der parallel zur vorgegebenen Geraden verlaufenden Geraden vorteilhafterweise jeweils eine zur Bezeichnung der Elementtypen dienende Markierung zugeordnet.

Die Überprüfung, welcher Elementtyp mit dem nächsten Programmschritt anzusetzen ist wird erleichtert, wenn die Anzeige während des Programmablaufs zum Kennzeichnen des dem jeweils nächsten Programmschritt zugeordneten Anzeigefeldes betreibbar ist.

Wenn als Anzeigeelemente Leuchtdioden verwendet werden, kann diese Kennzeichnung besonders einfach erreicht werden, wenn die Leuchtdiode(n) des zu kennzeichnenden Anzeigefeldes blinkend betrieben wird (werden).

Wenn die anzusetzenden Elemente mehrteilig gebildet sind und die einzelnen Elementtypen hinsichtlich mindestens eines der Elementteile voneinander unterscheidbar sind, ist es besonders vorteilhaft, wenn jedes Anzeigefeld mindestens zwei zum Bezeichnen der Sorte eines der Elementteile, hinsichtlich derer die Elementtypen unterscheidbar sind, dienende Anzeigeelemente aufweist.

Eine Erhöhung der Variabilität der erfindungsgemäßen Ansetzvorrichtung wird erreicht, wenn sie eine Einrichtung zum Speichern einer Anzahl vorgegebener Programme, eine Einrichtung zum Anwählen eines der Programme und ein Anzeigefeld zum Darstellen einer das angewählte Programm kennzeichnenden Information aufweist.

Die vorstehend beschriebene Anordnung der zum Darstellen des Programms betreibbaren Anzeige kann auch zur Vereinfachung und Erhöhung der Zuverlässigkeit bei der Programmerstellung mit Vorteil eingesetzt werden. Dazu weist die erfindungsgemäße Vorrichtung zweckmäßigerweise eine Einrichtung zum Erstellen eines Programms zum sequentiellen Ansetzen von Elementen unterschiedlicher Typen an ein Trägermaterial, vorzugsweise zum Ansetzen von Schließelementen, wie etwa Druckknopfelementen an Textil-, Leder- und Kunststoffartikel, das aus einer Anzahl von sequentiell ablaufenden Programmschritten besteht, mit denen jeweils der Typ eines der anzusetzenden Elemente festgelegt wird, und eine zum Darstellen des Programms betreibbare Anzeige auf, wobei die Anzeige in der vorstehend erläuterten Weise gebildet ist.

Zur Vereinfachung der Programmerstellung ist die Anzeige beim Erstellen des Programms zweckmäßigerweise zum Kennzeichnen des dem als nächstes einzugebenden Programmschritt zugeordneten Anzeigefeldes, beispielsweise durch einen blinkenden Betrieb von Anzeigeelementen in Form von Leuchtdioden dieses Anzeigefeldes, betreibbar.

Weiterhin ist es vorteilhaft, wenn die Anzeige beim Erstellen des Programms zum Darstellen der mit den bereits eingegebenen Programmschritten festgelegten Elementtypen in den diesen Programmschritten zugeordneten Anzeigefeldern betreibbar ist.

Eine besonders kompakte Anordnung der Ansetzvorrichtung bzw. des Kontrollpaneels der Ansetzvorrichtung kann erreicht werden, wenn eine Einrichtung zum Umstellen der Vorrichtung zwischen einem Programmierbetrieb und einem Ansetzbetrieb und nur eine Anzeige zum Darstellen des Programms während des Programmierbetriebs und des Ansetzbetriebs vorgesehen ist.

Zweckmäßigerweise ist dabei ein zum Kennzeichnen der Betriebsart betreibbares Anzeigefeld vorgesehen.

Die Umstelleinrichtung kann besonders einfach in Form nur einer auf dem Kontrollpaneel angebrachten Umstelltaste gebildet sein.

Eine besonders einfache und dennoch eine variable Programmierung der Ansetzvorrichtung erlaubende Anordnung der Eingabeeinrichtung wird erhalten, wenn sie ein eine Anzahl von zum Auswählen des Typs der mit den einzelnen Programmschritten anzusetzenden Elemente dienender Tasten und eine zum Anwählen des jeweils nächsten Programmschrittes dienende Taste umfassendes Tastenfeld aufweist.

Zweckmäßigerweise ist dabei die Anzeige, das Tastenfeld und die Umstelltaste auf nur einem Kontrollpaneel angeordnet.

Nachstehend wird die Erfindung unter Bezugnahme auf die Zeichnung, auf die hinsichtlich aller in der Beschreibung nicht näher herausgestellten, erfindungswesentlichen Merkmale verwiesen wird, erläutert. In der Zeichnung zeigt:
- Fig. 1: den mechanischen Aufbau einer Ausführungsform einer erfindungsgemäßen Ansetzvorrichtung und
- Fig. 2: ein frei programmierbares Kontrollpaneel dieser Ansetzvorrichtung sowie eine schematische Darstellung einer Anordnung von mit der Ansetzvorrichtung an einen Strampelanzug anzusetzenden Druckknopfelementen.

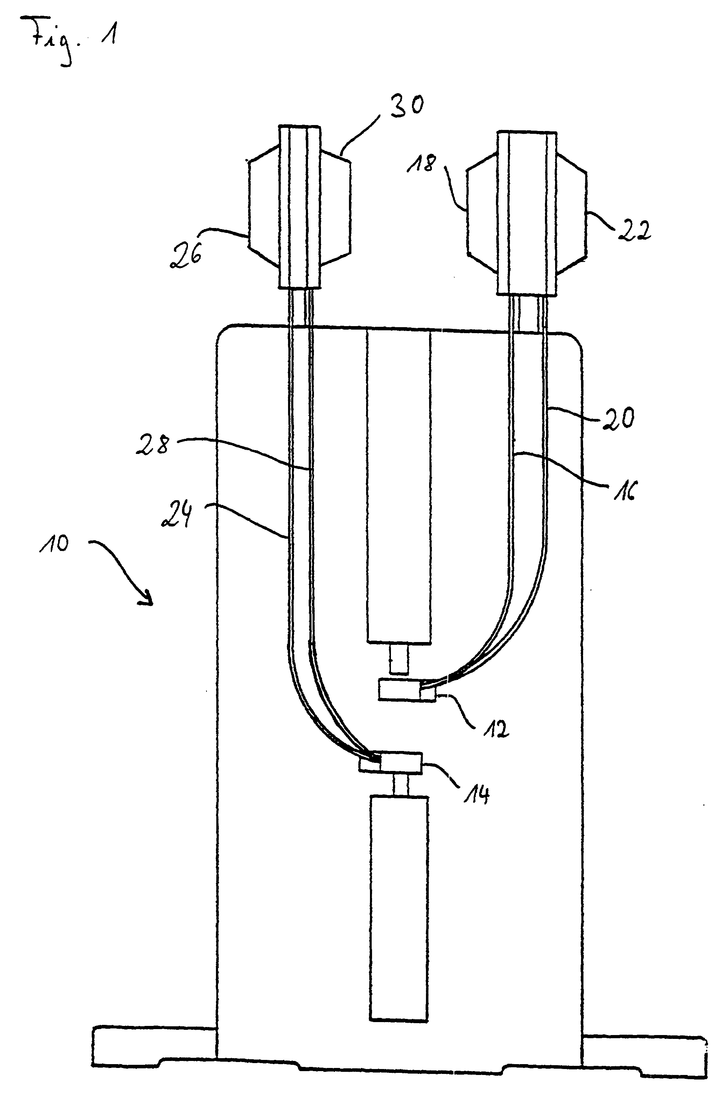

Die in Fig. 1 dargestellte Ansetzvorrichtung weist eine Presse mit einem Oberwerkzeug 12 und einem Unterwerkzeug 14 auf, wobei das Oberwerkzeug 12 zum Ansetzen eines Druckknopfteils an einen Textilartikel gegen das Unterwerkzeug 14 verfahrbar ist. Dem Oberwerkzeug 12 sind über eine Rutsche 16 Druckknopfaufnahmeteile aus einem Magazin 18 zuführbar. Ferner sind dem Oberwerkzeug 12 über eine Rutsche 20 Druckknopfeinsteckteile aus einem Magazin 22 zuführbar. Dem Unterwerkzeug 14 sind über Rutschen 24 und 28 Befestigungsteile in Form von Zackenringen aus Magazinen 26 und 30 zuführbar. Aus dem Magazin 26 können dem Unterwerkzeug 14 beispielsweise verchromte Zackenringe zugeführt werden, während dem Unterwerkzeug 14 aus dem Magazin 30 beispielsweise weiß lackierte Zackenringe zugeführt werden können.

Die Zuführung der Druckknopfteile aus den Magazinen 18 und 22 zum Oberwerkzeug 12 und die Zuführung der Befestigungsteile aus den Magazinen 26 und 30 zum Unterwerkzeug 14 wird gemäß einem vorgegebenen Programm gesteuert.

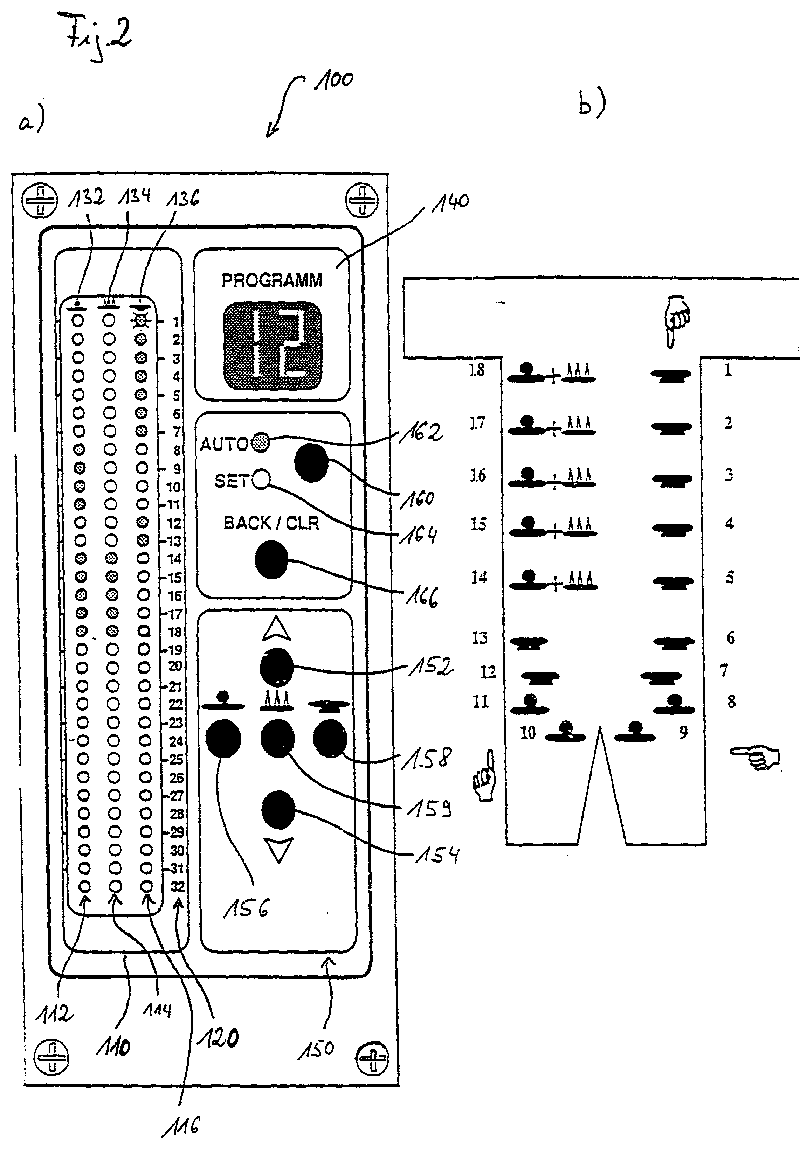

Zur Darstellung des Programmablaufs ist die Ansetzvorrichtung mit einem in Fig. 2 dargestellten Kontrollpaneel 100 versehen. Das Kontrollpaneel 100 weist eine Anzeige 110 mit zweiunddreißig längs eines Längsrandes des Paneels untereinander angeordneten Anzeigefeldern auf. Jedem der Anzeigefelder ist auf dem Paneel 100 eine in einer parallel zum Längsrand verlaufenden Spalte 120 angeordnete Markierung in Form einer Programmschrittnummer zugeordnet.

Wie der Fig. 2 zu entnehmen ist, sind die einzelnen Anzeigefelder in der Reihenfolge der Programmschritte, denen sie zugeordnet sind, untereinander angeordnet. Ferner weist jedes Anzeigefeld jeweils drei längs einer senkrecht zum Längsrand des Paneels verlaufenden Linie angeordnete Anzeigeelemente in Form von Leuchtdioden auf. Die Anzeigeelemente der einzelnen Anzeigefelder sind in drei parallel zum Längsrand des Paneels 100 verlaufenden Spalten 112, 114 und 116 angeordnet. Jeder der Spalten 112, 114 und 116 ist eine Markierung 132, 134 bzw. 136 zugeordnet, die zur Bezeichnung der mit den einzelnen Programmschritten anzusetzenden Druckknopfelementtypen dienen.

Durch die Markierung 132 wird beispielsweise angedeutet, daß dann, wenn in einem Anzeigefeld ein Anzeigeelement der Spalte 112 leuchtet, mit dem entsprechenden Programmschritt ein Druckknopfeinsteckteil angesetzt wird. Andererseits wird mit der Markierung 136 angedeutet, daß dann, wenn in einem Anzeigefeld ein Anzeigeelement der Spalte 116 leuchtet, mit dem entsprechenden Programmschritt ein Druckknopfaufnahmeteil angesetzt wird. Schließlich wird mit der Markierung 134 angedeutet, daß dann, wenn in einem Anzeigefeld ein Anzeigeelement der Spalte 114 leuchtet, ein weiß lackierter Zackenring zum Befestigen des Druckknopfteils benutzt wird, während dann, wenn in einem Anzeigefeld das Anzeigeelement der Spalte 114 nicht leuchtet zum Ansetzen ein verchromter Zackenring benutzt wird.

In dem in Fig. 2a dargestellten Betriebszustand der Anzeige 110 wird also ein Programmablauf dargestellt, bei dem zunächst sieben Druckknopfaufnahmeteile mit verchromten Zackenringen angesetzt werden, dann vier Druckknopfeinsteckteile mit verchromten Zackenringen angesetzt werden, danach zwei Druckknopfaufnahmeteile mit verchromten Zackenringen angesetzt werden und schließlich fünf Druckknopfeinsteckteile mit weiß lackierten Zackenringen angesetzt werden. Das entspricht dem Programmablauf, der zum Ansetzen der in Fig. 2b schematisch angedeuteten achtzehn Druckknopfelemente an einen Strampelanzug in der durch die Ziffern 1 bis 18 in Fig. 2b gekennzeichneten Reihenfolge benötigt wird.

In der Fig. 2a ist angedeutet, daß die zur Spalte 116 gehörende Leuchtdiode des Anzeigefeldes 1 blinkt. Dadurch wird gekennzeichnet, daß als nächstes der erste Programmschritt ausgeführt wird. Beim Betrieb der Ansetzvorrichtung laufen die Programmschritte 1 bis 18 sequentiell ab und werden zyklisch wiederholt. Dadurch wird eine Serienproduktion ermöglicht, ohne daß zwischen der Bearbeitung einzelner Artikel eine Manipulation des Kontrollpaneels notwendig ist.

Das Kontrollpaneel 100 ist mit einer Einrichtung zum Speichern einer Anzahl von Ansetzprogrammen ausgestattet. Zum Bezeichnen des jeweils aufgerufenen Programms ist es mit einem zusätzlichen Anzeigefeld 140 versehen. In dem in Fig. 2a dargestellten Zustand wird mit dem Anzeigefeld 140 dargestellt, daß das zwölfte Arbeitsprogramm aufgerufen ist.

Das in Fig. 2a dargestellte Kontrollpaneel erlaubt ferner den Aufruf anderer verfügbarer Arbeitsprogramme. Dazu wird das Kontrollpaneel 100 durch Betätigen der Taste 160 in einen das programmgesteuerte Ansetzen der Druckknopfelemente erlaubenden Betriebszustand versetzt. Das Erreichen dieses Betriebszustandes wird durch Aufleuchten der Leuchtdiode 162 angezeigt. Zum Aufrufen des nächsten Programms, d.h. im vorliegenden Fall des Programms mit der Nummer 13 ist die Taste 152 eines Tastenfeldes 150 zu betätigen. Nach einmaliger Betätigung dieser Taste würde im in Fig. 2a dargestellten Betriebszustand im Anzeigefeld 140 die Zahl 13 erscheinen. Ferner würde mit der Anzeige 110 der Ablauf des Programms Nr. 13 durch Aufleuchten der entsprechenden Leuchtdioden dargestellt. Das vorhergehende Programm, d.h. im in Fig. 2a dargestellten Betriebszustand das Programm mit der Nr. 11 wird durch Betätigen der Taste 154 des Tastenfeldes 150 erreicht. Durch wiederholtes Drücken der Taste 152 können auch noch die Programme 14, 15 usw. erreicht werden, während durch wiederholtes Drücken der Taste 154 die Programme 10, 9 usw. erreicht werden können.

Schließlich erlaubt das in Fig. 2a dargestellte Kontrollpaneel auch noch die Erstellung neuer Programme. Dazu kann das Kontrollpaneel 100 durch Betätigen der Taste 160 auf einen Programmierbetrieb umgestellt werden. Bei Erreichen des Programmierbetriebs erlischt die Leuchtdiode 162 und die Leuchtdiode 164 leuchtet auf. Zu Beginn der Programmierung leuchten die Leuchtdioden des ersten Anzeigefeldes auf. Dadurch wird angezeigt, daß als nächstes der erste Programmschritt einzugeben ist. Wird dann die Taste 156 des Tastenfeldes 150 gedrückt, wird festgelegt, daß mit dem ersten Programmschritt ein Druckknopfeinsteckteil anzusetzen ist, während durch Drücken der Taste 158 festgelegt wird, daß mit dem ersten Programmschritt ein Druckknopfaufnahmeteil anzusetzen ist. Durch zusätzliches Drücken der Taste 159 des Tastenfeldes 150 wird festgelegt, daß das ausgewählte Druckknopfteil mit einem weiß lackierten Zackenring anzusetzen ist. Wenn die Taste 159 nicht betätigt wird, wird das ausgewählte Druckknopfteil mit einem verchromten Zackenring angesetzt. Die Erstellung des ersten Programmschritts kann durch Betätigen der Taste 154 abgeschlossen werden. Dadurch wird die Eingabe des nächsten, also im beschriebenen Fall des zweiten Programmschrittes ermöglicht. Zur Kennzeichnung dieses Zuständes blinken die Leuchtdioden des zweiten Anzeigefeldes. Durch Betätigung der Tasten 156, 158 und 159 kann dann der Typ des mit dem zweiten Programmschritt anzusetzenden Druckknopfelementes ausgewählt werden. Die Programmierung der weiteren Programmschritte erfolgt analog. Zusätzlich erlaubt das in Fig. 2a dargestellte Kontrollpaneel auch noch eine einfache Programmkorrektur, indem es durch Betätigen der Taste 152 des Tastenfeldes 150 das Erreichen des jeweils vorhergehenden Programmschrittes ermöglicht. Während der Programmerstellung werden in den den bereits eingegebenen Programmschritten zugeordneten Anzeigefeldern die in diesen Programmschritten festgelegten Druckknopfelementtypen durch Aufleuchten der entsprechenden Leuchtdioden bezeichnet.

Das fertiggestellte Programm kann durch Betätigen der Taste 160 unter der im Anzeigefeld 140 angezeigten Nummer in der Speichereinrichtung abgelegt werden. Die erfolgreiche Programmablage wird durch Aufleuchten der Leuchtdiode 162 und Erlöschen der Leuchtdiode 164 angezeigt. Gleichzeitig wird so wieder der das programmgesteuerte Ansetzen erlaubende Betriebszustand des Kontrollpaneeles 100 erreicht.

Zur Ermöglichung einer Korrektur während des Programmablaufs weist das Kontrollpaneel 100 eine Korrekturtaste 166 auf. Nach Betätigen dieser Taste 166 während des Programmablaufs wird der zuvor ausgeführte Programmschritt wiederholt.

Die Erfindung ist nicht auf die vorstehend erläuterte Vierkanalansetzvorrichtung eingeschränkt. Sie kann beispielsweise auch bei Dreikanal-Ansetzvorrichtung eingesetzt werden, die lediglich die Auswahl zwischen zwei unterschiedlichen Druckknopfteilen ermöglichen, die mit gleichen Zackenringen angesetzt werden. Ferner kann die erfindungsgemäße Vorrichtung auch zum Ansetzen von drei oder mehr unterschiedlichen Druckknopfteilen oder verschiedenartigen Verzierungselementen eingesetzt werden.

## Patentansprüche

1. Vorrichtung zum sequentiellen Ansetzen von Elementen unterschiedlicher Typen an ein Trägermaterial, vorzugsweise zum Ansetzen von Schließelementen, wie etwa Druckknopfelementen, an Textil-, Leder- und Kunststoffartikel, gemäß einem vorgegebenen Programm, das aus einer Anzahl sequentiell ablaufender Programmschritte besteht, von denen jeder den Typ jeweils eines der anzusetzenden Elemente festlegt, mit einer auf einem Kontrollpaneel angeordneten und zum Darstellen des Programms betreibbaren Anzeige (110) **dadurch gekennzeichnet, daß** die Anzeige (110) eine Anzahl Anzeigefelder aufweist, von denen jedes jeweils einem der Programmschritte zugeordnet und zum Bezeichnen des damit festgelegten Elementtyps betreibbar ist, wobei die Anzeigefelder in der Reihenfolge der Programmschritte, denen sie zugeordnet sind, angeordnet sind.

2. Vorrichtung nach Anspruch 1, **dadurch gekennzeichnet, daß** die Anzeigefelder längs einer vorgegebenen Geraden auf dem Anzeigepaneel (100) angeordnet sind.

3. Vorrichtung nach einem der Ansprüche 1 oder 2, **dadurch gekennzeichnet, daß** jedem Anzeigefeld eine auf dem Kontrollpaneel angebrachte, den Programmschritt, dem das jeweilige Anzeigefeld zugeordnet ist, bezeichnende Markierung, vorzugsweise eine Programmschrittnummer, zugeordnet ist.

4. Vorrichtung nach einem der vorhergehenden Ansprüche, **dadurch gekennzeichnet, daß** jedes Anzeigefeld mindestens zwei Anzeigeelemente aufweist.

5. Vorrichtung nach den Ansprüche 2 und 4, **dadurch gekennzeichnet, daß** die Anzeigeelemente der einzelnen Anzeigefelder längs senkrecht zur vorgegebenen Geraden verlaufenden Linien angeordnet sind.

6. Vorrichtung nach Anspruch 5, **dadurch gekennzeichnet, daß** die Anzeigeelemente längs einer Anzahl parallel zur vorgegebenen Geraden verlaufender Geraden (112, 114, 116) angeordnet sind.

7. Vorrichtung nach Anspruch 6, **dadurch gekennzeichnet, daß** jeder der parallel zur vorgegebenen Geraden verlaufenden Geraden (112, 114, 116) jeweils eine zur Bezeichnung der Elementtypen dienende Markierung (132, 134, 136) zugeordnet ist.

8. Vorrichtung nach einem der vorhergehenden Ansprüche, **dadurch gekennzeichnet, daß** die Anzeige (110) während des Programmablaufs zum Kennzeichnen des dem jeweils nächsten Programmschritt zugeordneten Anzeigefeldes betreibbar ist.

9. Vorrichtung nach einem der vorhergehenden Ansprüche, **dadurch gekennzeichnet, daß** mindestens ein Anzeigefeld als Anzeigeelement eine Leuchtdiode aufweist.

10. Vorrichtung nach den Ansprüchen 9 und 10, **dadurch gekennzeichnet, daß** die Leuchtdiode zum Kennzeichnen blinkend betreibbar ist.

11. Vorrichtung nach einem der vorhergehenden Ansprüche, **dadurch gekennzeichnet, daß** die Elemente mehrteilig gebildet sind und die Elementtypen hinsichtlich mindestens eines der Elementteile voneinander unterscheidbar sind.

12. Vorrichtung nach Anspruch 11, **dadurch gekennzeichnet, daß** jedes Anzeigefeld mindestens zwei zum Bezeichnen der Sorte eines der Elementteile, hinsichtlich derer die Elementtypen voneinander unterscheidbar sind, dienende Anzeigeelemente aufweist.

13. Vorrichtung nach einem der vorhergehenden Ansprüche, **gekennzeichnet durch** eine Einrichtung zum Speichern einer Anzahl vorgegebener Programme, einer Einrichtung (152, 154) zum Anwählen eines der Programme und einem Anzeigefeld (140) zum Darstellen einer das angewählte Programm kennzeichnende Information.

14. Vorrichtung nach einem der vorhergehenden Ansprüche **gekennzeichnet durch** eine Einrichtung zum Erstellen des vorgegebenen Programms.

15. Vorrichtung nach Anspruch 14, **dadurch gekennzeichnet, daß** die Anzeige (110) beim Erstellen des Programms zum Kennzeichnen des dem als nächstes einzugebenden Programmschritt zugeordneten Anzeigefeldes betreibbar ist.

16. Vorrichtung nach Anspruch 14 oder 15, **dadurch gekennzeichnet, daß** die Anzeige (110) beim Erstellen des Programms zum Darstellen der mit den bereits eingegebenen Programmschritten festgelegten Elementtypen in den diesen Programmschritten zugeordneten Anzeigefeldern betreibbar ist.

17. Vorrichtung nach einem der Ansprüche 14 bis 16, **gekennzeichnet durch** eine Einrichtung zum Umstellen zwischen einem Programmierbetrieb und einem Ansetzbetrieb und nur einer Anzeige zum Darstellen des Programms während des Programmierbetriebs und des Ansetzbetriebs.

18. Vorrichtung nach Anspruch 17, **gekennzeichnet durch** ein zum Kennzeichnen der Betriebsart betreibbares Anzeigefeld (162, 164).

19. Vorrichtung nach Anspruch 17 oder 18, **dadurch gekennzeichnet, daß** die Umstelleinrichtung durch nur eine Umstelltaste (160) gebildet ist.

20. Vorrichtung nach einem der Ansprüche 14 bis 19, **dadurch gekennzeichnet, daß** die Programmerstellungseinrichtung ein eine Anzahl von zum Auswählen des Typs der mit den einzelnen Programmschritten anzusetzenden Elemente dienender Tasten (156, 158, 159) und eine zum Anwählen des jeweils nächsten Programmschrittes dienende Taste (154) umfassendes Tastenfeld (150) aufweist.

21. Vorrichtung nach Anspruch 20, **dadurch gekennzeichnet, daß** die Anzeige (110) das Tastenfeld (150) und die Umstelltaste (160) auf nur einem Paneel angeordnet sind.

## Claims

1. Device for the sequential fixing of elements of different types to a support material, preferably for fixing closing elements, such as press stud elements, to textile, leather and plastic articles, in accordance with a predetermined program, which comprises a plurality of sequentially performed program steps, whereof each establishes the type of a particular element to be fixed, with a display (110) located on a control panel and operable for displaying the program, **characterized in that** the display (110) has a plurality of display areas, whereof each is associated with one of the program steps and is operable for designating the element type established therewith, the display areas being arranged in the order of the program steps with which they are associated.

2. Device according to claim 1, **characterized in that** the display areas are located along a predetermined straight line on the display panel (100).

3. Device according to one of the claims 1 or 2, **characterized in that** with each display area is associated a marking, preferably a program step number, designating the program step with which the particular display area is associated and which is applied to the control panel.

4. Device according to one of the preceding claims, **characterized in that** each display area has at least two display elements.

5. Device according to claims 2 and 4, **characterized in that** the display elements of the individual display areas are arranged along lines running perpendicular to the predetermined straight lines.

6. Device according to claim 5, **characterized in that** the display elements are arranged along a plurality of lines (112, 114, 116) which are parallel to the predetermined straight lines.

7. Device according to claim 6, **characterized in that** with each of the lines (112, 114, 116) parallel to the predetermined straight lines is associated a marking (132, 134, 136) for designating the element types.

8. Device according to one of the preceding claims, **characterized in that** during the program sequence the display (110) can be operated for designating the display area associated with the next program step.

9. Device according to one of the preceding claims, **characterized in that** at least one display area has a light emitting diode as the display element.

10. Device according to claim 9, **characterized in that** the light emitting diode is operated in flushing manner for designation purposes.

11. Device according to one of the preceding claims, **characterized in that** the elements are of a multipart nature and that the element types can be distinguished from one another with respect to at least one of the element parts.

12. Device according to claim 11, **characterized in that** each display area has at least two display elements used for designating the type of one of the element parts with respect to which the element types can be distinguished from one another.

13. Device according to one of the preceding claims, **characterized by** a device for storing a plurality of predetermined programs, a device (152, 154) for selecting one of the programs and a display area (140) for displaying an information characterizing the selected program.

14. Device according to one of the preceding claims, **characterized by** a device for producing the predetermined program.

15. Device according to claim 14, **characterized in that**, on producing the program, the display (110) can be operated for designating the display area associated with the next program step to be inputted.

16. Device according to claim 14 or 15, **characterized in that**, on producing the program, the display (110) can be operated for displaying the element types established with the already inputted program steps in the display areas associated with said program steps.

17. Device according to one of the claims 14 to 16, **characterized by** a device for switching between a programming operation and a fixing operation and a single display for displaying the program during programming operation and fixing operation.

18. Device according to claim 17, **characterized by** a display area (162, 164) operable for designating the mode of operation.

19. Device according to claim 17 or 18, **characterized in that** the shifting device is formed by a single shifting key (160).

20. Device according to one of the claims 14 to 19, **characterized in that** the program producing device has a plurality of keys (156, 158, 159) used for selecting the type of elements to be fixed with the individual program steps and a keyboard (150) incorporating the key (154) for selecting the in each case next program step.

21. Device according to claim 20, **characterized in that** the display (110), keyboard (150) and shifting key (160) are located on a single panel.

## Revendications

1. Dispositif de fixation séquentielle d'éléments de types différents à un matériau de support, de préférence pour la fixation d'éléments de fermeture, comme par exemple des éléments de boutons-pression, à des articles en textile, cuir et matière synthétique, selon un programme prédéterminé qui est constitué d'un nombre d'étapes de programme se déroulant d'une manière séquentielle dont chacune détermine le type respectivement d'un des éléments à fixer, avec un affichage (110) disposé sur un panneau de contrôle et actionnable pour la représentation du programme, **caractérisé en ce que** l'affichage (110) présente un nombre de champs d'affichage dont chacun est associé à respectivement l'une des étapes de programme et est actionnable pour désigner le type d'élément ainsi déterminé, où les champs d'affichage sont disposés dans l'ordre des étapes de programme auxquelles ils sont associés.

2. Dispositif selon la revendication 1, **caractérisé en ce que** les champs d'affichage sont disposés le long d'une droite prédéfinie sur le panneau d'affichage (100).

3. Dispositif selon l'une des revendications 1 ou 2, **caractérisé en ce qu'**il est associé à chaque champ d'affichage un marquage marqué sur le panneau de contrôle, désignant l'étape de programme à laquelle est associé le champ d'affichage respectif, de préférence un numéro d'étape de programme.

4. Dispositif selon l'une des revendications précédentes, **caractérisé en ce que** chaque champ d'affichage présente au moins deux éléments d'affichage.

5. Dispositif selon les revendications 2 et 4, **caractérisé en ce que** les éléments d'affichage des champs d'affichage individuels sont disposés le long de lignes s'étendant perpendiculairement à la ligne droite prédéterminée.

6. Dispositif selon la revendication 5, **caractérisé en ce que** les éléments d'affichage sont disposés le long d'un nombre de lignes droites (112, 114, 116) s'étendant parallèlement à la ligne droite prédéterminée.

7. Dispositif selon la revendication 6, **caractérisé en ce qu'**il est associé à chacune des lignes droites (112, 114, 116) s'étendant parallèlement à la ligne droite prédéterminée respectivement un marquage (132, 134, 136) destiné à désigner les types d'éléments.

8. Dispositif selon l'une des revendications précédentes, **caractérisé en ce que** l'affichage (110) est actionnable pendant le déroulement du programme pour l'identification du champ d'affichage associé à l'étape de programme suivante respective.

9. Dispositif selon l'une des revendications précédentes, **caractérisé en ce qu'**au moins un champ d'affichage présente comme élément d'affichage une diode luminescente.

10. Dispositif selon les revendications 9 et 10, **caractérisé en ce que** la diode luminescente, pour l'identification, est actionnable d'une manière clignotante.

11. Dispositif selon l'une des revendications précédentes, **caractérisé en ce que** les éléments sont réalisés en plusieurs parties et que les types d'élément, en ce qui concerne au moins l'une des parties d'élément, peuvent être distingués les uns des autres.

12. Dispositif selon la revendication 11, **caractérisé en ce que** chaque champ d'affichage présente au moins deux éléments d'affichage servant à désigner la sorte d'une des parties d'élément, par lesquelles les types d'élément peuvent être distingués les uns des autres.

13. Dispositif selon l'une des revendications précédentes, **caractérisé par** une installation pour le stockage d'un nombre de programmes prédéterminés, une installation (152, 154) pour sélectionner l'un des programmes et un champ d'affichage (140) pour représenter une information caractérisant le programme sélectionné.

14. Dispositif selon l'une des revendications précédentes, **caractérisé par** une installation pour l'établissement du programme prédéterminé.

15. Dispositif selon la revendication 14, **caractérisé en ce que** l'affichage (110) est actionnable lors de l'établissement du programme pour caractériser le champ d'affichage associé à l'étape de programme à entrer ensuite.

16. Dispositif selon la revendication 14 ou 15, **caractérisé en ce que** l'affichage (110) est actionnable, lors de l'établissement du programme pour représenter les types d'élément déterminés par les étapes de programme déjà entrées dans les champs d'affichage associés à ces étapes de programme.

17. Dispositif selon l'une des revendications 14 à 16, **caractérisé par** une installation pour commuter entre un fonctionnement par programme et un fonctionnement de fixation et seulement un affichage pour représenter le programme pendant le fonctionnement par programme et le fonctionnement de fixation.

18. Dispositif selon la revendication 17, **caractérisé par** un champ d'affichage (162, 164) actionnable pour caractériser le type de fonctionnement.

19. Dispositif selon la revendication 17 ou 18, **caractérisé en ce que** l'installation de commutation est formée par seulement une touche de commutation (160).

20. Dispositif selon l'une des revendications 14 à 19, **caractérisé en ce que** l'installation d'établissement du programme présente un clavier (150) comprenant un nombre de touches (156, 158, 159) servant à sélectionner le type des éléments à fixer au moyen des étapes de programme individuelles et une touche (154) servant à sélectionner l'étape de programme respective suivante.

21. Dispositif selon la revendication 20, **caractérisé en ce que** l'affichage (110), le clavier (150) et la touche de commutation (160) sont disposés sur un seul panneau.
